# EUROPEAN PATENT SPECIFICATION

(11) **EP 2 046 146 B1**
(45) Date of publication and mention of the grant of the patent: **16.09.2009**
(21) Application number: 07786998.0
(22) Date of filing: 03.07.2007
(51) Int. Cl.: A23L 1/212, A23L 1/01

(54) **METHOD OF PRODUCING SAUTÉED VEGETABLES**
VERFAHREN ZUR HERSTELLUNG VON KURZANGEBRATENEM GEMÜSE
PROCÉDÉ DE PRÉPARATION DE LÉGUMES SAUTÉS

(30) Priority: 21.07.2006 EP 06253829
(43) Date of publication of application: 15.04.2009
(73) Proprietor: Unilever N.V., 3013 AL Rotterdam (NL); Unilever PLC, London EC4Y 0DY (GB)
(72) Inventor: BELL, James St John, Milton Keynes Buckinghamshire MK3 5EX (GB); MCCURRACH, Fiona Clare, Bedford Bedfordshire MK41 0LU (GB)
(74) Representative: Tjon, Hon Kong Guno
(86) International application number: PCT/EP2007/056669
(87) International publication number: WO 2008/009549

(56) References cited:
- JP-A- 6 046 816
- JP-A- 2005 224 241
- US-A1- 2003 035 881

## Description

This invention relates to a method for preparing sautéed vegetables used as a building block in the preparation of sauces, soups and meal solutions.

The vegetables principally sautéed by chefs in preparing sauces and soups are onions, shallots and garlic which belong to the genus *allium.* To prepare sautéed onions, shallots and garlic, a chef will typically dice 200 g of the vegetables into 5-15 mm pieces and sauté the diced vegetables in a 30 cm diameter sauté pan in a minimum amount of vegetable oil for 6-12 minutes. In this manner, the vegetables are textually softened, develop a brown surface colour (through caramelisation and Maillard reactions), which can be used to impart colour in sauces and soups, and develop a caramelised (through caramelisation) and savoury (through Maillard reactions and allinase catalysed reaction of alkenyl cysteine sulphoxide (a compound typically found in *alliums*)) flavour. Flavour is also concentrated through dehydration of the vegetables.

US 2003/0035881 A1 discloses a method for preparing sautéed onions. JP-A-6046816 discloses a process for the preparation of a sautéed food.

When sautéing a one tonne industrial scale batch of sauce involving the processing of 100-200 kg of onions, the heat transfer per unit weight of vegetable is lower than at the chef scale and consequently the sautéing process is substantially slower. Thus it can take up to 30 minutes for substantial browning of the vegetables to occur and for the generation of strong savoury and sweet flavours, by which time the vegetables are over-softened. Reduction of the sautéing period in order to prevent over-softening of the vegetables only leads to light browning of the vegetables and poor flavour generation.

### SUMMARY OF THE INVENTION

The forgoing problem is solved in one aspect of the invention by the provision of a process for the preparation of a food composition, the process comprising the steps of:
(a) comminuting a first portion of the composition of 70-97% by weight to a particle size of 1-20 mm in diameter, wherein the first portion comprises at least one raw vegetable selected from the group consisting of alliums, carrots, mushrooms, celeriac, fennel and Jerusalem artichoke;
(b) comminuting a second portion of the composition of 30-3% by weight to a particle size of less than 1 mm in diameter, wherein the second portion comprises at least one raw allium;
(c) heating the second portion in oil to a temperature of 100-140 degrees Centigrade thereby to reduce the water content of the said portion to less than 20% by weight; and then
(d) combining the first portion and the second portion, wherein the weight ratio of the second portion and the oil is at least 75:25.

By de-coupling the colour and flavour generation steps (steps (b) and (c)) from the texture control step (step (a)), it is possible to control the flavour and colour independently of the texture of the food composition thereby to produce a range of food compositions with various combinations of colour and flavour, and texture.

In *alliums*, the generation of compounds associated with a savoury and caramelised flavour takes place at temperatures in the range 100-140 degrees Centigrade. This temperature is only attained on the surface of vegetables cut into pieces in the range 1-20 mm in diameter (the size typically used by the chef) with the core of the vegetable pieces reaching less than 100 degrees Centigrade. By comminuting a portion of the vegetables to less than 1 mm in diameter, the core as well as the surface of the comminuted vegetables is able to reach 100-140 degrees Centigrade and the generation of compounds associated with a savoury and caramelised flavour takes place throughout the comminuted vegetables thereby producing a particularly strongly flavoured portion of vegetables. This strong flavour generation is further enhanced as comminution of the vegetables disrupts the cell membranes thereby releasing a higher yield of the enzyme allinase which then reacts with alkenyl cysteine sulphoxide thereby producing higher yields of the compounds associated with a savoury and caramelised flavour. Furthermore as only a portion of the vegetable mass is heated, the time taken to generate the compounds associated with a savoury and caramelised flavour in the said portion is considerably less than if the whole vegetable mass was heated.

Preferably the second portion of the composition is comminuted to a size less than or equal to 0.5 mm. The first portion of the composition may be comminuted to a size greater than or equal to 5 mm, preferably 10 mm. The ratio of the ranges of the first and second portions of the composition may be 75-97:25-3, preferably 90-97:10-3 % by weight. The second portion of the composition may be heated to 110-130 degrees Centigrade. The weight ratio of the second portion of the composition and the oil may be 95:5, preferably 85:15, most preferably 75:25.

The oil may be a vegetable oil. Preferred vegetables oils may be selected from sunflower oil, palm oil, peanut oil, sesame oil, olive oil or rape seed.

If the first portion of the composition remains uncooked, the portion will provide a crunchy texture to the food composition. However the process may additionally include the step of heating the first portion in oil to a temperature of 100-140 degrees Centigrade thereby to reduce the water content to 70-80 % by weight. Dehydration of the vegetables of the first portion in this manner reduces their crunchy texture but not to the extent that the texture becomes soggy and limp.

Alternatively the process additionally includes the step of heating the first portion in water to a temperature of 85-100 degrees Centigrade or steam for 1- 2 minutes. This step produces vegetables with a soft texture, but not to the extent that the texture becomes soggy and limp.

The process may additionally include the step of heating the first portion in air to a temperature of 60-180 degrees Centigrade thereby to reduce the water content to 70-80 % by weight. As the vegetables do not absorb any oil using this method of dehydration, the vegetables have a chewy more resilient texture.

Thus by the variety of optional process steps set out hereinabove, the texture of the food composition may be varied at will.

For the purposes of this specification, alliums comprise any one of celery, garlic, onions, shallots, spring onions, and any other vegetable belonging to the genus *allium.*

The second portion may additionally comprise at least one raw vegetable selected from the group consisting of carrots, mushrooms, celeriac, fennel and Jerusalem artichoke.

The process may optionally include the additional step of freezing the food composition.

In another aspect of the invention, a food composition is provided which is obtainable by the inventive method.

### DETAILED DESCRIPTION

The invention is now illustrated with reference to the examples of the preparation of a tomato based sauce given hereinbelow.

### Example 1: Kitchen scale (comparative example)

A generic 1kg batch of tomato based sauce was prepared comprising 20% 10-15 mm diced onions, 60% 10 mm diced tomato, 8% tomato puree, 6.5% olive oil, 1% salt and additional minor ingredients such as herbs and pepper. The onion component (200g) was sautéed in a preheated pan containing the olive oil for 6 to 12 minutes until the desired degree of browning and flavour development was achieved. The sautéed material was then transferred with the remaining ingredients to a cooking vessel and heated to a temperature of about 80°C to produce the finial sauce.

### Example 2: Pilot plant scale (comparative example)

The formulation of example 1 was prepared at pilot scale to a batch size of approximately 100kg in a Blentherm steam jacketed cooking vessel. 6.5kg of olive oil was preheated within the cooking vessel to a temperature of 130°C. Following the addition of 20kg of 10 mm diced onions, the oil temperature decreased substantially to 40°C and it took 7 minutes for the mixture to reach a temperature of 100°C. Continued heating of the onion and olive oil mixture for a total mixing time of 20 minutes resulted in no substantial browning of the material whilst the texture of the onion component had significantly softened to an unacceptable level. Extending the cooking time to 30 minutes with half the amount of olive oil and onion in order to speed up the rate of browning resulted in substantial browning but the onion component had softened to an unacceptable level.

### Example 3: Kitchen scale

The formulation of example 1 was prepared by dicing 193g of onions to a 10 mm particle size. Then pureeing 200g of onions and heating the pureed onions in 65g of olive oil for 9 -11 minutes in a 300 mm diameter sauté pan at 110 - 140°C whilst stirring to prevent burning. After heating, the pureed onion and olive oil mixture (flavour concentrate) has adopted an intense brown colour and weighs 85-110g. Finally 2-6g of the flavour concentrate is combined with the diced onions and remaining sauce ingredients and the resultant mixture heated. The resulting sauce has a stronger savoury and caramelised flavour than comparative example 1.

## Claims

1. A process for the preparation of a food composition, the process comprising the steps of:
(a) comminuting a first portion of the composition of 70-97% by weight to a particle size of 1-20 mm in diameter, wherein the first portion comprises at least one raw vegetable selected from the group consisting of alliums, carrots, mushrooms, celeriac, fennel and Jerusalem artichoke;
(b) comminuting a second portion of the composition of 30-3% by weight to a particle size of less than 1 mm in diameter, wherein the second portion comprises at least one raw allium;
(c) heating the second portion in oil to a temperature of 100-140 degrees Centigrade thereby to reduce the water content of the said portion to less than 20% by weight; and then
(d) combining the first portion and the second portion,
wherein the weight ratio of the second portion and the oil is at least 75:25.

2. A process in accordance with claim 1 additionally including the step of heating the first portion in oil to a temperature of 100-140 degree Centigrade thereby to reduce the water content to 70-80 % by weight.

3. A process in accordance with claim 1 additionally including the step of heating the first portion in water to a temperature of 85-100 degrees Centigrade or steam for 1-2 minutes.

4. A process in accordance with claim 1 additionally including the step of heating the first portion in air to a temperature of 60-180 degrees Centigrade thereby to reduce the water content to 70-80 % by weight.

5. A process in accordance with any one of the preceding claims wherein alliums comprise any one of celery, garlic, onions, shallots, spring onions, and any other vegetable belonging to the genus *allium.*

6. A process in accordance with any one of the preceding claims wherein the second portion additionally comprises at least one raw vegetable selected from the group consisting of carrots, mushrooms, celeriac, fennel and Jerusalem artichoke.

7. A process in accordance with any one of the preceding claims comprising the additional step of freezing the food composition.

8. A food composition obtainable by the process according to any one of the preceding claims.

## Patentansprüche

1. Verfahren zur Herstellung einer Nahrungsmittelzusammensetzung, wobei das Verfahren die Schritte:
(a) Zerkleinern eines ersten Teils der Zusammensetzung von 70-97 Gewichts-% zu einer Partikelgröße von 1-20 mm im Durchmesser, wobei der erste Teil wenigstens ein Rohgemüse, ausgewählt aus der Gruppe, bestehend aus Gemüsen der Gattung Allium, Karotten, Speisepilzen, Knollensellerie, Fenchel und Jerusalem-Artischocke, umfasst;
(b) Zerkleinern eines zweiten Teils der Zusammensetzung von 30-3 Gewichts-% zu einer Partikelgröße von weniger als 1 mm im Durchmesser, wobei der zweite Teil wenigstens ein rohes Gemüse der Gattung Allium umfasst;
(c) Erhitzen des zweiten Teils in Öl auf eine Temperatur von 100-140 Grad Celsius, wodurch der Wassergehalt des Teils auf weniger als 20 Gewichts-% verringert wird und danach
(d) Kombinieren des ersten Teils und des zweiten Teils umfasst,
wobei das Gewichtsverhältnis des zweiten Teils zu dem Öl wenigstens 75:25 ist.

2. Verfahren gemäß Anspruch 1, das außerdem den Schritt des Erhitzens des ersten Teils in Öl auf eine Temperatur von 100-140 Grad Celsius umfasst, wodurch der Wassergehalt auf 70-80 Gewichts-% verringert wird.

3. Verfahren gemäß Anspruch 1, das außerdem den Schritt des Erhitzens des ersten Teils in Wasser auf eine Temperatur von 85-100 Grad Celsius oder Dampf für 1-2 Minuten umfasst.

4. Verfahren gemäß Anspruch 1, das außerdem den Schritt des Erhitzens des ersten Teils in Luft auf eine Temperatur von 60-180 Grad Celsius umfasst, wodurch der Wassergehalt auf 70-80 Gewichts-% verringert wird.

5. Verfahren gemäß einem der vorangehenden Ansprüche, wobei Gemüse der Gattung Allium eines von Sellerie, Knoblauch, Zwiebeln, Schalotten, Lauchzwiebeln, und einem anderen Gemüse, das zur Gattung Allium gehört, umfassen.

6. Verfahren gemäß einem der vorangehenden Ansprüche, wobei der zweite Teil zusätzlich wenigstens ein rohes Gemüse, ausgewählt aus der Gruppe, bestehend aus Karotten, Speisepilzen, Sellerie, Fenchel und Jerusalem-Artischocke, umfasst.

7. Verfahren gemäß einem der vorangehenden Ansprüche, das den zusätzlichen Schritt des Gefrierens der Nahrungsmittel-Zusammensetzung umfasst.

8. Nahrungsmittel-Zusammensetzung, die durch das Verfahren gemäß einem der vorangehenden Ansprüche erhältlich ist.

## Revendications

1. Procédé pour la préparation d'une composition alimentaire, lequel procédé comprend les étapes consistant à :
(a) hacher finement une première partie de la composition, de 70 à 97 % en poids, jusqu'à une taille de particules de 1 à 20 mm de diamètre, la première partie comprenant au moins un légume cru choisi dans le groupe constitué par les alliums, les carottes, les champignons, les céleris raves, le fenouil et le topinambour ;
(b) hacher finement une deuxième partie de la composition, de 30 à 3 % en poids, jusqu'à une taille de particules inférieure à 1 mm de diamètre, la deuxième partie comprenant au moins un allium cru ;
(c) chauffer la deuxième partie dans de l'huile à une température de 100 à 140 °C de façon à réduire ainsi la teneur en eau de ladite partie à moins de 20 % en poids ; et ensuite
(d) combiner la première partie et la deuxième partie,
dans lequel le rapport en poids de la deuxième partie et de l'huile est d'au moins 75/25.

2. Procédé selon la revendication 1, comprenant de plus l'étape consistant à chauffer la première partie dans de l'huile à une température de 100 à 140 °C de façon à réduire ainsi la teneur en eau à 70-80 % en poids.

3. Procédé selon la revendication 1, comprenant de plus l'étape consistant à chauffer la première partie dans de l'eau à une température de 85 à 100 °C ou de la vapeur pendant 1 à 2 minutes.

4. Procédé selon la revendication 1, comprenant de plus l'étape consistant à chauffer la première partie dans de l'air à une température de 60 à 180 °C de façon à réduire ainsi la teneur en eau à 70-80 % en poids.

5. Procédé selon l'une quelconque des revendications précédentes, dans lequel les alliums comprennent l'un quelconque parmi le céleri, l'ail, les oignons, les échalotes, les cives, et n'importe quel autre légume appartenant au genre *allium*.

6. Procédé selon l'une quelconque des revendications précédentes, dans lequel la deuxième partie comprend de plus au moins un légume cru choisi dans le groupe constitué par les carottes, les champignons, le céleri rave, le fenouil et le topinambour.

7. Procédé selon l'une quelconque des revendications précédentes, comprenant l'étape supplémentaire consistant à congeler la composition alimentaire.

8. Composition alimentaire pouvant être obtenue par le procédé selon l'une quelconque des revendications précédentes.
